# EUROPEAN PATENT APPLICATION

(11) **EP 2 343 153 A1**
(43) Date of publication of application: **13.07.2011**
(21) Application number: 09824810.7
(22) Date of filing: 05.11.2009
(51) Int. Cl.: B23Q 11/00, B23Q 11/10

(54) **MACHINE TOOL**

(30) Priority: 07.11.2008 JP 2008286052
(71) Applicant: Mitsubishi Heavy Industries, Ltd., Tokyo 108-8215 (JP)
(72) Inventor: MIZUTA, Keiji, Hiroshima-shi Hiroshima 733-8553 (JP); KANEKO, Takeshi, Hiroshima-shi Hiroshima 733-8553 (JP); YAMASHITA, Tsugumaru, Ritto-shi Shiga 520-3080 (JP)
(74) Representative: Henkel, Feiler & Hänzel
(86) International application number: PCT/JP2009/068885
(87) International publication number: WO 2010/053111

(57) **Abstract**

A machine tool 100, in which cut dust is produced and scattered due to the cutting of a work 1 with a tool, includes a cutting liquid jetting device 130 surrounding the work 1 with cutting liquid 10 by jetting the cutting liquid 10 in such a shape that the cutting liquid 10 spreads wider on a lower side than on an upper side.

## Description

### TECHNICAL FIELD

The present invention relates to a machine tool, which is effective particularly when applied to a case where cut dust is produced and scattered due to the cutting of a work material with a tool.

### BACKGROUND ART

In some machine tools such as machining centers which process a work material while using a cover to entirely surround peripheral areas of a table and a main spindle provided to a machine body, cutting is performed with cutting liquid supplied to the leading end of a tool. Thus, cut dust produced by the cutting is scattered to its surrounding areas and sometimes enters gaps in the cover and the like. In this respect, in Patent Literature 1 and the like listed below, a scattering prevention plate is disposed to cover an upper side of a work material. In addition, a cutting water ejecting nozzle is attached along the periphery of the scattering prevention plate. Then, when the cutting water is ejected from the cutting water ejecting nozzle, a water curtain is formed to screen all the sides of the work material in the horizontal direction. Thereby, the scattering of cut dust to the surrounding areas is suppressed.

### CITATION LIST

### PATENT LITERATURES

Patent Literature 1: Japanese Patent Application Publication No. Hei 8-174371
Patent Literature 2: Japanese Patent Application Publication No. Hei 10-156660
Patent Literature 3: Japanese Patent Application Publication No. 2004-074335

### SUMMARY OF INVENTION

### TECHNICAL PROBLEM

However, according to the machine tools described in Patent Literature 1 and the like, the water curtain is formed by ejecting the cutting water from the cutting water ejecting nozzle provided along the periphery of the scattering prevention plate disposed to cover the upper side of a work material. Thus, the upper side of the work material is covered by the plate member by a large area. This makes the plate member likely to hinder such operations as the replacement and the like of the tool and the work material, causing a large restraint in the replacement, displacement and the like of the tool and the work material.

In view of the above circumstances, the present invention aims to provide a machine tool capable of suppressing the scattering of cut dust to its surrounding areas without causing a large restraint in the replacement, displacement and the like of a tool and a work material.

### SOLUTION TO PROBLEM

A machine tool according to a first invention for solving the aforementioned problem is characterized by including cutting liquid jetting means for surrounding the work material with a cutting liquid by jetting the cutting liquid in such a shape that the cutting liquid spreads wider on a lower side than on an upper side.

A machine tool according to a second invention is characterized in that, in the first invention, the cutting liquid jetting means jets the cutting liquid in the form of a membrane or droplets in such a way that the cutting liquid forms a liquid curtain surrounding the work material in a conical or pyramid shape.

A machine tool according to a third invention is characterized in that, in the second invention, the cutting liquid jetting means jets the cutting liquid also inside the liquid curtain in the form of droplets.

A machine tool according to a fourth invention is characterized in that, in any one of the first to third inventions, the cutting liquid jetting means includes jetting direction changing means capable of changing a direction of jetting the cutting liquid in such a way that the direction follows a cutting point.

A machine tool according to a fifth invention is characterized by further including, in any one of the first to third inventions, position moving means for moving a horizontal position of the cutting liquid jetting means.

### ADVANTAGEOUS EFFECTS OF INVENTION

By the machine tool according to the present invention, the cutting liquid jetting means jets cutting liquid in such a way that the cutting liquid spreads wider on a lower side than on an upper side and surrounds a work material. Thus, the scattering of cut dust produced from the work material can be suppressed while securing a large space above the work material. Accordingly, the scattering of cut dust to its surrounding areas can be suppressed without causing a large restraint in the replacement, displacement and the like of the tool and the work material.

### BRIEF DESCRIPTION OF DRAWINGS

[Fig. 1] Fig. 1 shows a schematic overall configuration diagram of a main part of a first embodiment of a machine tool according to the present invention.
[Fig. 2] Fig. 2 shows a schematic configuration diagram of the main part in Fig. 1.
[Fig. 3] Fig. 3 shows a schematic overall configuration diagram of a main part of a second embodiment of a machine tool according to the present invention.
[Fig. 4] Fig. 4 shows a schematic configuration diagram of the main part in Fig. 3.
[Fig. 5] Fig. 5 shows a schematic overall configuration diagram of a main part of a third embodiment of a machine tool according to the present invention.
[Fig. 6] Fig. 6 shows a schematic configuration diagram of the main part in Fig. 5.
[Fig. 7] Fig. 7 shows a schematic overall configuration diagram of a main part of a fourth embodiment of a machine tool according to the present invention.
[Fig. 8] Fig. 8 shows a schematic configuration diagram of the main part in Fig. 7.
[Fig. 9] Fig. 9 shows a schematic configuration diagram of a main part of another embodiment of a machine tool according to the present invention.
[Fig. 10] Fig. 10 shows a schematic configuration diagram of a main part of still another embodiment of a machine tool according to the present invention.

### DESCRIPTION OF EMBODIMENTS

Hereinbelow, embodiments of a machine tool according to the present invention will be described based on the drawings. It should be noted that the present invention is not to be limited only to the embodiments to be described below based on the drawings.

### <First Embodiment>

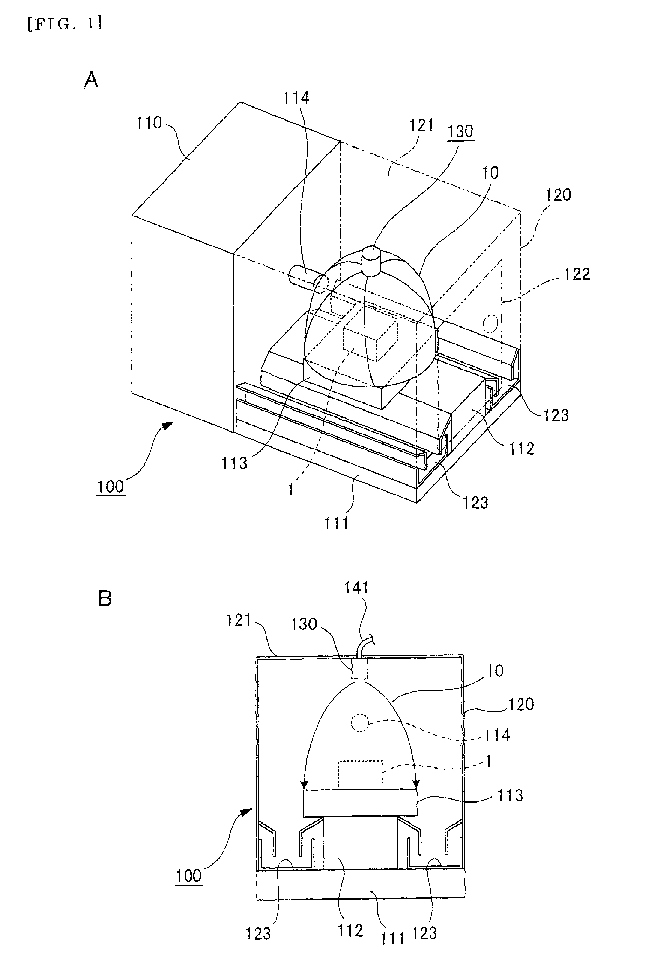

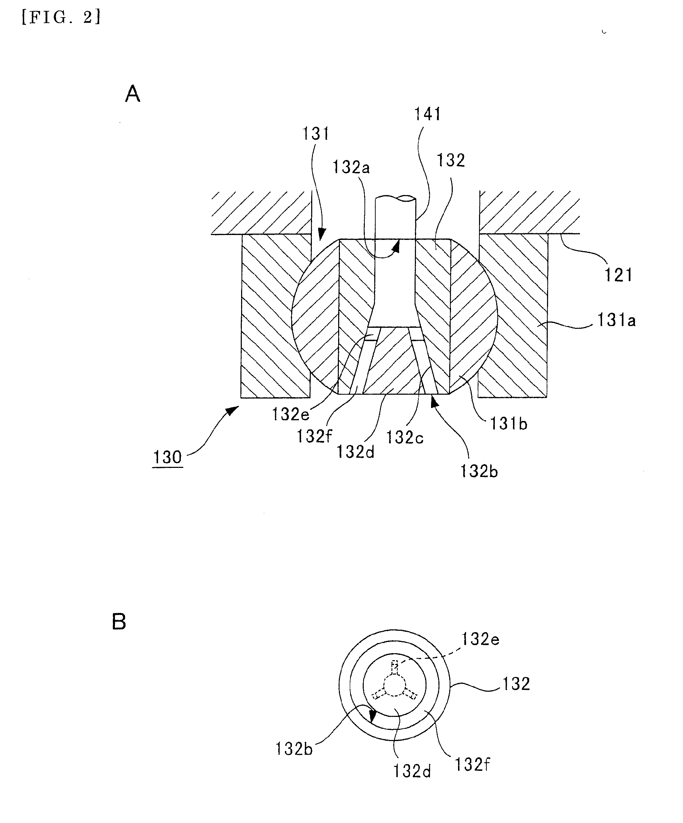

A first embodiment of the machine tool according to the present invention will be described based on Figs. 1 and 2. Fig. 1 is a schematic overall configuration diagram of a main part of the machine tool. Fig. 2 is a schematic configuration diagram of the main part in Fig. 1.

As shown in Fig. 1, a cover 120 is attached to the front side of a machine body 110 in such a way as to entirely surround peripheral areas of a table 113, a main spindle 114 and the like. A cutting liquid jetting device 130 is attached to a part of a ceiling 121 of the cover 120 which is located above the table 113. The cutting liquid jetting device 130 is cutting liquid jetting means for jetting cutting liquid 10 such that the cutting liquid 10 spreads wider on a lower side than on an upper side, and has a structure as below.

As shown in Fig. 2, a seat 131a of a spherical bearing 131 is fixed to and supported by the part of the ceiling 121 of the cover 120. The spherical bearing 131 is jetting direction changing means for the cutting liquid jetting device 130. To a spherical member 131b rotatably supported at an inner side of the seat 131a of the spherical bearing 131, a nozzle body 132 is inserted to penetrate from one side to the other side thereof. This nozzle body 132 is supported by the seat 131a with the spherical member 131b in between.

A receiving hole 132a through which to receive the cutting liquid 10 is formed in a base end side of the nozzle body 132. A jetting hole 132b larger in diameter than the receiving hole 132a is formed in a leading end side of the nozzle body 132. The receiving hole 132a and the jetting hole 132b in the nozzle body 132 communicate with each other through a tapered communication hole 132c. Inside the communication hole 132c in the nozzle body 132, a truncated conical block 132d whose largest-diameter portion is smaller in diameter than the jetting hole 132b is provided coaxially with the jetting hole 132b in such a way that an annular jetting slit 132f is formed between the block 132d and the jetting hole 132b. The block 132b is fixed to and supported by a wall surface of the communication hole 132c by use of brackets 132e.

A leading end side of a cutting liquid supply tube 141 is coupled to a base end side of the nozzle body 132 whereas a base end side of the cutting liquid supply tube 141 is coupled to a cutting liquid supply pump (unillustrated) which supplies the cutting liquid 10.

As shown in Fig. 1, cutting liquid receivers 123 are disposed in lower areas inside the cover 120. These cutting liquid receivers 123 communicate with the cutting liquid supply pump through a mesh filter, a liquid storage tank and the like which are not illustrated here.

Meanwhile, in the vicinity of the main spindle 114, there is disposed a cutting liquid supply nozzle (unillustrated) through which to supply the cutting liquid 10 to a leading end side of a tool attached to the main spindle 114. This cutting liquid supply nozzle is connected to the cutting liquid supply pump. Note that reference numerals 111, 112 and 122 in Fig. 1 are a base, a bed and a door, respectively.

In the machine tool 100 according to this embodiment, as the cutting liquid supply pump and the main spindle 114 are actuated with a work 1 as the work material placed on the table 113 and with a tool attached to the leading end of the main spindle 114, the cutting of the work 1 is performed with the cutting liquid 10 supplied to the leading end side of the tool from the cutting liquid supply nozzle. At the same time, the cutting liquid 10 is supplied to the cutting liquid jetting device 130 and jetted from the jetting slit 132f through the communication hole 132c in the nozzle body 132 in the form of a membrane spreading wider on a lower side than on an upper side thereof. As a result, the cutting liquid 10 forms a liquid curtain surrounding the work 1 in a conical shape.

Accordingly, cut dust scattering from the work 1 is blocked by the liquid curtain, collected in the cutting liquid receivers 123 together with the cutting liquid 10, and then separated from the cutting liquid 10 by the mesh filter. The cutting liquid 10 collected after the separation is stored in the liquid storage tank and then used again.

Incidentally, in a case where the work 1 is moved upon movement of the table 113, the spherical member 131b is rotated relative to the seat 131a of the spherical bearing 131 correspondingly to the movement of the work 1 so that the facing direction of the nozzle body 132 of the cutting liquid jetting device 130 can follow the cutting point. In this way, the work 1 can always be surrounded by the conical liquid curtain of the cutting liquid 10.

In sum, the machine tool 100 according to this embodiment is configured to jet the cutting liquid 10 by the cutting liquid jetting device 130 in the form of a membrane spreading wider on a lower side than on an upper side thereof, so that the work 1 is surrounded by the cutting liquid 10 in a conical shape.

Thus, the machine tool 100 according to this embodiment enables the work 1 to be surrounded by the cutting liquid 10 by using only the cutting liquid jetting device 130 disposed above the work 1. This makes it possible to secure a large space above the work 1.

The machine tool 100 according to this embodiment can therefore suppress the scattering of cut dust to its surrounding areas without causing a large restraint in the replacement, displacement and the like of the tool and the work 1.

In addition, the facing direction of the nozzle body 132 of the cutting liquid jetting device 130 is changed correspondingly to the movement of the work 1, so that the direction of jetting the cutting liquid is changed to follow the cutting point. Thus, the work 1 can always be surrounded by the cutting liquid 10 in a conical shape. As a result, the area to be surrounded by the liquid curtain can be made significantly smaller than conventional cases. This allows a significant reduction in the amount of the cutting liquid 10 to be used, as compared to conventional cases.

Further, since the amount of the cutting liquid 10 to be used can be significantly reduced as compared to conventional cases, the size of the cutting liquid supply pump can be reduced and also the mechanism to cool the cutting liquid 10 can be simplified, whereby the installation space and the cost can be saved.

Meanwhile, in a case where the cutting liquid supply pump and the mechanism to cool the cutting liquid 10 are configured similarly to those in conventional cases, the amount of the cutting liquid 10 to be jetted from the cutting liquid jetting device 130 can be adjusted according to the size, scattering speed and the like of cut dust. In this way, the scattering of cut dust can be suppressed more efficiently.

Also, since use of the simply-configured cutting liquid jetting device 130 alone suffices, the equipment cost can be reduced.

### <Second Embodiment>

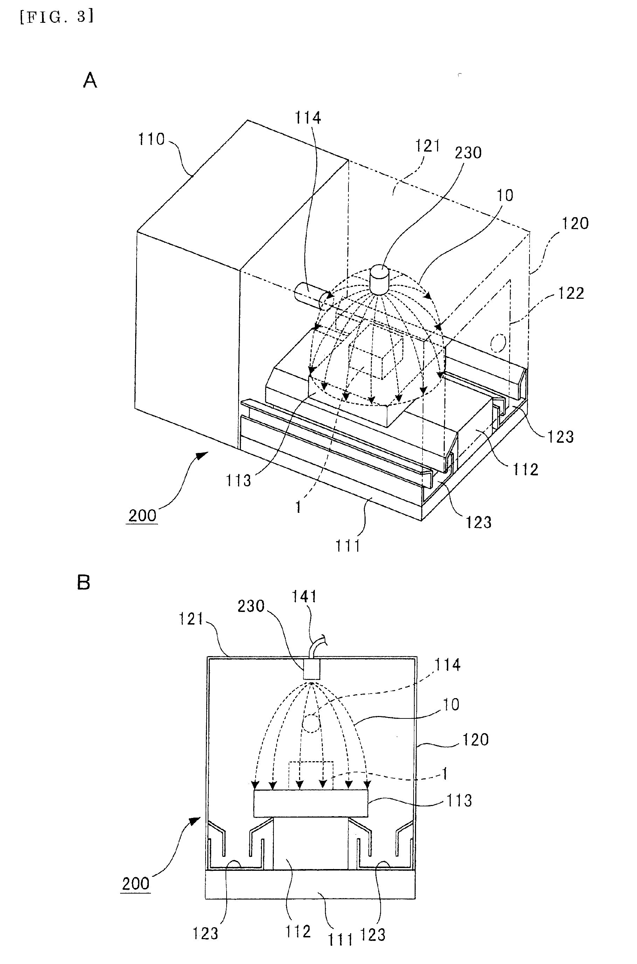

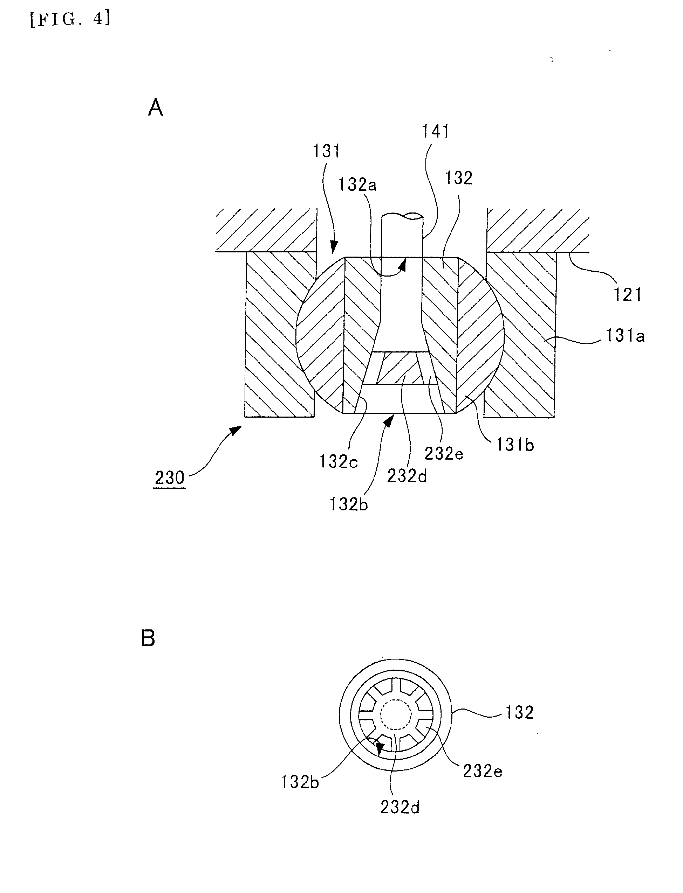

A second embodiment of the machine tool according to the present invention will be described based on Figs. 3 and 4. Fig. 3 is a schematic overall configuration diagram of a main part of the machine tool. Fig. 4 is a schematic configuration diagram of the main part in Fig. 3. Note that reference numerals same as those used in the description of the first embodiment will be used for components same as those in the first embodiment, and description overlapping with what has been described in the first embodiment will be omitted.

As shown in Fig. 3, a cutting liquid jetting device 230 is attached to the part of the ceiling 121 of the cover 120 which is located above the table 113. The cutting liquid jetting device 230 is cutting liquid jetting means for jetting the cutting liquid 10 such that the cutting liquid 10 spreads wider on a lower side than on an upper side, and has a structure as below.

As shown in Fig. 4, a truncated conical block 232d is fitted in and supported by the communication hole 132c in the nozzle body 132. In an outer circumferential surface of this block 232d, multiple notches 232e extending in a direction connecting both end surfaces of the block 232d are formed in such a way as to be arranged in the circumferential direction thereof.

As in the first embodiment, in the machine tool 200 according to this embodiment, upon actuation of the cutting liquid supply pump, the cutting liquid 10 is supplied to the cutting liquid jetting device 230 and is caused to flow through the notches 232e in the block 232d via the communication hole 132c in the nozzle body 132. The cutting liquid 10 is then jetted from the jetting hole 132c in the form of droplets spreading wider on a lower side than on an upper side thereof. As a result, the cutting liquid 10 forms a liquid curtain surrounding the work 1 in a conical shape.

In sum, while the machine tool 100 according the first embodiment is configured to jet the cutting liquid 10 in the form of a membrane by use of the cutting liquid jetting device 130, the machine tool 200 according to this embodiment is configured to jet the cutting liquid 10 in the form of droplets by use of the cutting liquid jetting device 230.

Thus, the machine tool 200 according to this embodiment can achieve similar advantageous effects to those achievable by the machine tool 100 according to the first embodiment as a matter of course, and also can reduce the amount of the cutting liquid 10 to be used as compared to the case of the machine tool 100 according to the first embodiment because of the jetting of the cutting liquid 10 in the form of droplets. Accordingly, the size of the cutting liquid supply pump can be further reduced and also the mechanism to cool the cutting liquid 10 can be further simplified, whereby the installation space and the cost can be further saved.

### <Third Embodiment

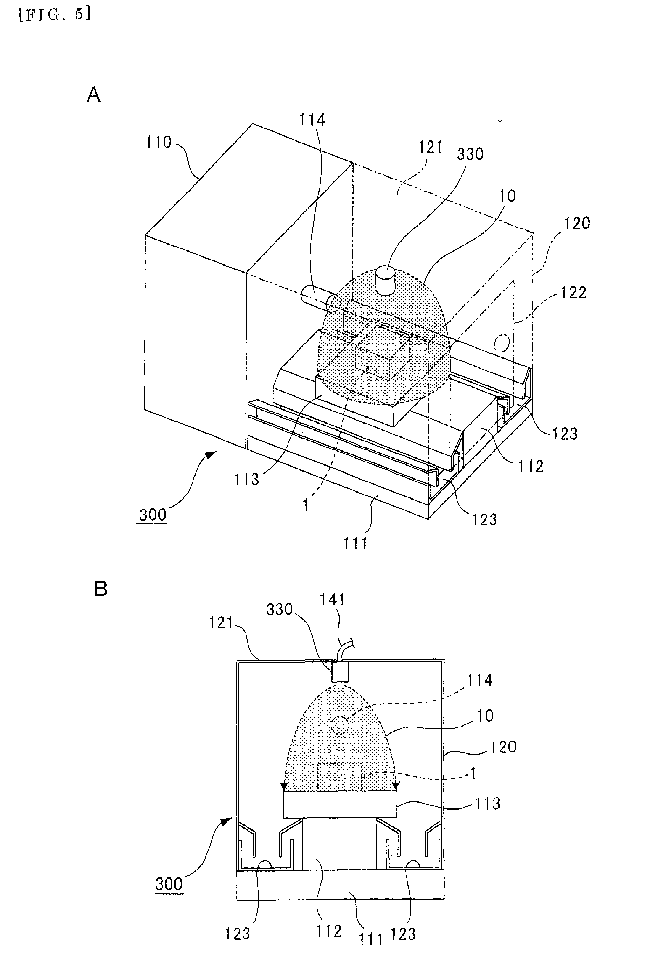

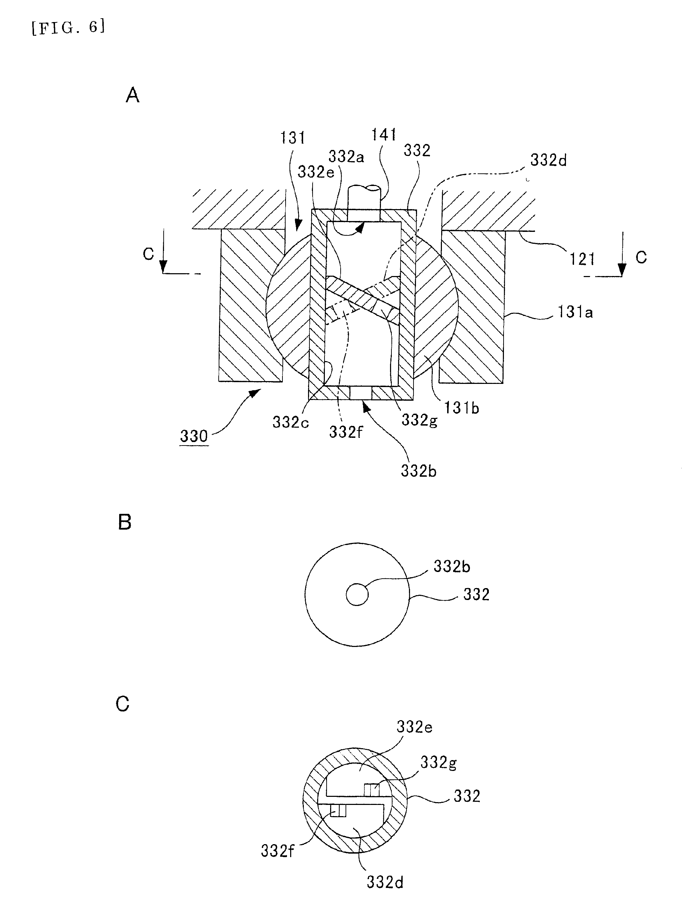

A third embodiment of the machine tool according to the present invention will be described based on Figs. 5 and 6. Fig. 5 is a schematic overall configuration diagram of a main part of the machine tool. Fig. 6 is a schematic configuration diagram of the main part in Fig. 5. Note that reference numerals same as those used in the description of the first and second embodiments will be used for components same as those in the first and second embodiments, and description overlapping with what has been described in the first and second embodiments will be omitted.

As shown in Fig. 5, a cutting liquid jetting device 330 is attached to the part of the ceiling 121 of the cover 120 which is located above the table 113. The cutting liquid jetting device 330 is cutting liquid jetting means for jetting the cutting liquid 10 such that the cutting liquid 10 spreads wider on a lower side than on an upper side, and has a structure as below.

As shown in Fig. 6, to the spherical member 131b of the spherical bearing 131, a nozzle body 332 is inserted to penetrate from one side to the other side thereof. This nozzle body 332 is supported by the seat 131a with the spherical member 131b in between.

A receiving hole 332a connected to the cutting liquid supply tube 141 is formed in a base end side of the nozzle body 332. A jetting hole 332b smaller in diameter than the receiving hole 332a is formed in a leading end side of the nozzle body 332. The receiving hole 332a and the jetting hole 332b in the nozzle body 332 communicate with each other through a communication hole 332c.

A partition plate 332d is attached to one axial half of the communication hole 332c in the nozzle body 332. The partition plate 332d partitions radially the one half of the communication hole 332c and is attached to be inclined with respect to the communication hole 332c in such a way that one end side of a surface thereof in contact with the communication hole 332c is located closer to the receiving hole 332a while the opposite end side of the surface in contact with the communication hole 332c is located closer to the jetting hole 332b. A flow path 332f through which the one and the other sides of the communication hole 332c communicate with each other is formed in the partition plate 332d at a position near the end thereof on the jetting hole 332b side.

In addition, a partition plate 332e is attached to the other axial half of the communication hole 332c in the nozzle body 332. The partition plate 332e partitions radially the half of the communication hole 332c and is attached to be inclined with respect to the communication hole 332c in such a way that one end side of a surface thereof in contact with the communication hole 332c is located closer to the jetting hole 332b while the opposite end side of the surface in contact with the communication hole 332c is located closer to the receiving hole 332a. A flow path 332g through which the one and the other sides of the communication hole 332c communicate with each other is formed in the partition plate 332e at a position near the end thereof on the jetting hole 332b side.

As in the first and second embodiments, in the machine tool 300 according to this embodiment, upon actuation of the cutting liquid supply pump, the cutting liquid 10 is supplied to the cutting liquid jetting device 330 and is caused to flow through the flow paths 332f and 332g in the respective partition plates 332d and 332e through the communication hole 332c in the nozzle body 332. The cutting liquid 10 is then jetted from the jetting hole 332c in the form of droplets spreading wider on a lower side than on an upper side thereof. As a result, the cutting liquid 10 forms a liquid curtain surrounding the work 1 in a conical shape. Moreover, the cutting liquid 10 is jetted inside the entire liquid curtain in the form of droplets so that the work 1 can be showered with the cutting liquid 10 in a conical shape.

In sum, while the machine tools 100 and 200 according to the first and second embodiments are configured to jet the cutting liquid 10 from their cutting liquid jetting devices 130 and 230 in an annular shape so that the cutting liquid 10 may not be spayed onto the work 1, the machine tool 300 according to this embodiment is configured to jet the cutting liquid 10 from the cutting liquid jetting device 330 in a disc shape so that the cutting liquid 10 may be sprayed onto the work 1.

Thus, the machine tool 300 according to this embodiment can achieve similar advantageous effects to those achievable by the machine tool 100 according to the first embodiment as a matter of course, and also can eliminate the cutting liquid supply nozzle disposed in the vicinity of the main spindle 114 because the cutting liquid 10 from the cutting liquid jetting device 330 is jetted in the disc shape so as to be sprayed also onto the work 1. Accordingly, the cost can be further saved.

### <Fourth Embodiment>

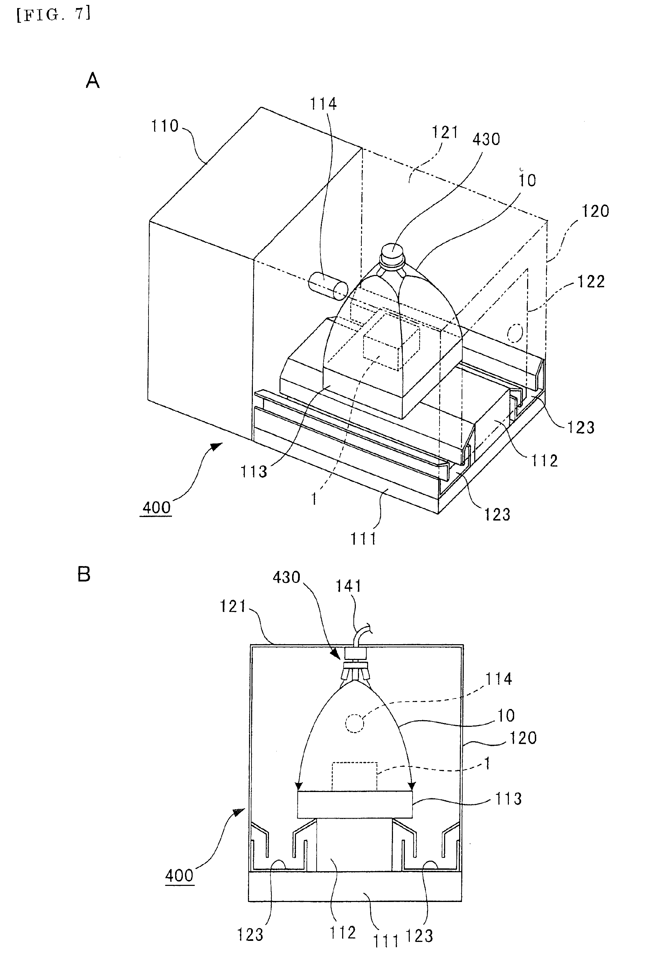

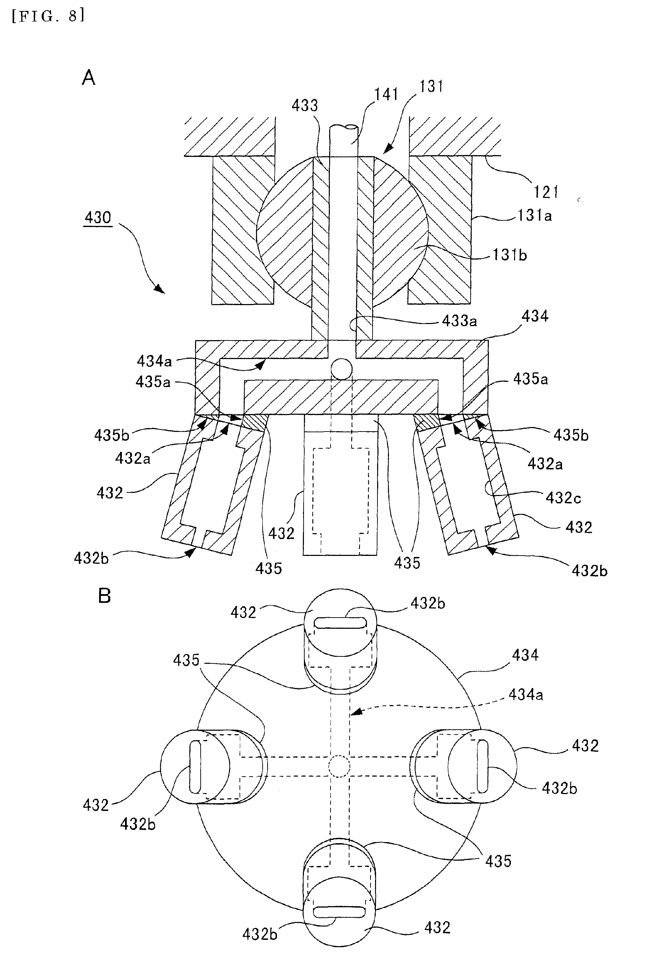

A fourth embodiment of the machine tool according to the present invention will be described based on Figs. 7 and 8. Fig. 7 is a schematic overall configuration diagram of a main part of the machine tool. Fig. 8 is a schematic configuration diagram of the main part in Fig. 7. Note that reference numerals same as those used in the description of the first to third embodiments will be used for components same as those in the first to third embodiments, and description overlapping with what has been described in the first to third embodiments will be omitted.

As shown in Fig. 7, a cutting liquid jetting device 430 is attached to the part of the ceiling 121 of the cover 120 which is located above the table 113. The cutting liquid jetting device 430 is cutting liquid jetting means for jetting the cutting liquid 10 such that the cutting liquid 10 spreads wider on a lower side than on an upper side, and has a structure as below.

As shown in Fig. 8, to the spherical member 131b of the spherical bearing 131, a support tube 433 is inserted to penetrate from one side to the other side thereof. This support tube 433 is supported by the seat 131a with the spherical member 131b in between. The cutting liquid supply tube 141 is connected to the base end of the support tube 433. A disc-shaped distribution plate 434 is coaxially attached to the leading end of the support tube 433.

Multiple (4 in this embodiment) circular attachment pedestals 435 are provided on the front surface side of the distribution plate 434 at a predetermined pitch in the circumferential direction of the distribution plate 434. Each attachment pedestal 435 is inclined such that its attachment surface 435b becomes closer to a radially outermost portion of the distribution plate 434. A flow path 435a is formed inside each attachment pedestal 435 coaxially with the corresponding attachment surface 435b. Inside the distribution plate 434, there are formed distribution paths 434a which connect the flow path 433a in the support tube 433 to the flow paths 435a in the attachment pedestals 435, respectively.

Base end sides of nozzle bodies 432 are attached to the attachment pedestals 435, respectively. A receiving hole 432a is formed in the base end side of each nozzle body 432 and is connected to the flow path 435a of the corresponding attachment pedestal 435. A jetting slit 432b in a long hole shape is formed in a leading end side of each nozzle body 432. The nozzle body 432 is so disposed that the longitudinal direction of its jetting slit 432b is oriented perpendicularly to the radial direction of the distribution plate 434. The receiving hole 432a and the jetting slit 432b in the nozzle body 432 communicate with each other through a communication hole 432c.

As in the first to third embodiments, in the machine tool 400 according to this embodiment, upon actuation of the cutting liquid supply pump, the cutting liquid 10 is supplied to the cutting liquid jetting device 330 and is caused to flow through the flow paths 435a in the attachment pedestals 435 from the support tube 433 through the distribution paths in the distribution plate 434. The cutting liquid 10 is then caused to flow through the communication holes 432c via the receiving holes 432a in the nozzle bodies 432, and thereafter jetted from the jetting slits 432b in the forms of membranes each spreading wider on a lower side than on an upper side thereof. As a result, the cutting liquid 10 forms liquid curtains together surrounding the work 1 in a pyramid shape (a four-sided pyramid shape in this embodiment).

In sum, the machine tools 100, 200 and 300 according to the first to third embodiments are configured to jet the cutting liquid 10 by their cutting liquid jetting devices 130, 230 and 330 such that the work 1 can be surrounded by a conical liquid curtain. In other words, the nozzle bodies 132 and 332, any of which is a single unit, are used to jet the cutting liquid 10 in an annular shape or a disc shape spreading wider on a lower side than on an upper side thereof. On the other hand, the machine tool 400 according to this embodiment is configured to jet the cutting liquid 10 by the cutting liquid jetting device 430 such that liquid curtains together surround the work 1 in a pyramid shape. In other words, the cutting liquid 10 is jetted from each of the multiple (4 in this embodiment) nozzle bodies 432 in a fan shape spreading wider on a lower side than on an upper side thereof so as to form a pyramid surface (a four-sided pyramid surface in this embodiment).

Thus, the machine tool 400 according to this embodiment can achieve similar advantageous effects to those achievable by the machine tool 100 according to the first embodiment.

### <Other Embodiments>

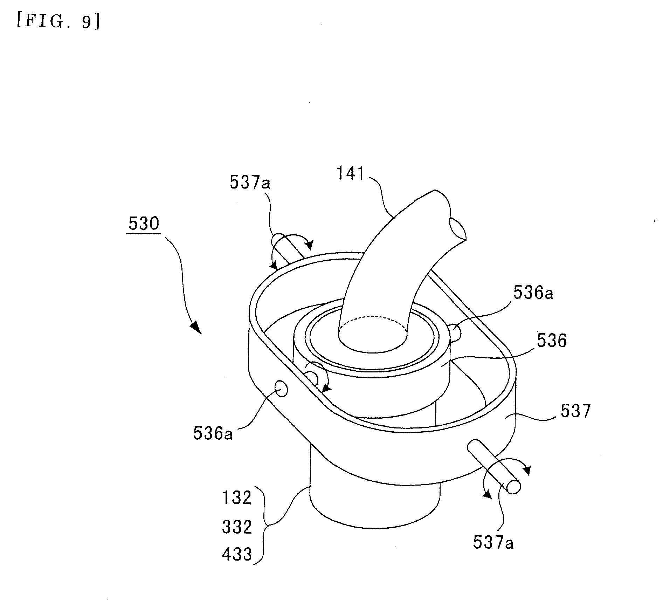

In each foregoing embodiment, there is provided the jetting direction changing means capable of changing the facing direction of the nozzle body 132, 332, 432 of the cutting liquid jetting device 130, 230, 330, 430 by the spherical bearing 131 in such a way that the direction of jetting the cutting liquid 10 is changed to follow the cutting point. Instead, the following cutting liquid jetting device 530 may be used as another embodiment using no spherical bearing 131. For example, in the cutting liquid jetting device 530, as shown in Fig. 9, an annular inner retaining ring 536, which includes a pair of support shafts 536a protruding radially from an outer circumferential surface thereof, is fitted on an outer circumferential surface of the base end side of the nozzle body 132, 332 or that of the support tube 433. The inner retaining ring 536 is disposed inward of an elliptical outer retaining ring 537 which includes a pair of support shafts 537a protruding in the longer diameter direction from an outer circumferential surface thereof at the longer diameter sides, in such a way that the support shafts 536a of the inner retaining ring 536 are arranged perpendicularly to the support shafts 537a of the outer retaining ring 537. The support shafts 536a of the inner retaining ring 536 are supported rotatably by the outer retaining ring 537. The support shafts 536a of the outer retaining ring 537 are supported rotatably by a bracket (unillustrated) attached to the ceiling 121 of the cover 120. This cutting liquid jetting device 530 can serve as the jetting direction changing means capable of changing the facing direction of the nozzle body 132, 332, 432 of the cutting liquid jetting device 130, 230, 330, 430 in such a way that the direction of jetting the cutting liquid 10 may be changed to follow the cutting point.

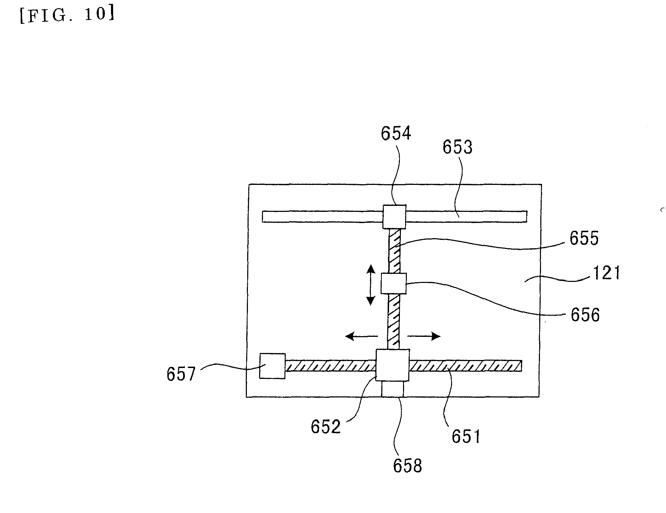

Each foregoing embodiment is described as a case using the jetting direction changing means capable of changing the facing direction of the nozzle body 132, 332, 432 of the cutting liquid jetting device 130, 230, 330, 430 in such a way that the direction of jetting the liquid 10 may be changed to follow the cutting point. Instead, as another embodiment, it is possible to eliminate this jetting direction changing means. In this case, position moving means may be additionally provided. For example, in this position moving means, as shown in Fig. 10, a ball screw shaft 651 is rotatably provided to an inner surface of the ceiling 121 of the cover 120 at a position near one of a pair of opposing edges of the ceiling 121. The ball screw shaft 651 is so provided that its longitudinal direction is along the one edge. A movable member 652 movable along the ball screw shaft 651 upon rotation of the ball screw shaft 651 is fitted to the ball screw shaft 651 by screwing. Meanwhile, a guide rail 653 is provided near the other of the pair of edges in such a way that its longitudinal direction is along the edge. A movable member 654 slidably movable along the guide rail 653 is provided to the guide rail 653. One and the other ends of a ball screw shaft 655 are rotatably supported by the movable members 652 and 654, respectively. A movable member 656 movable along the ball screw shaft 655 upon rotation of the ball screw shaft 655 is fitted to the ball screw shaft 655 by screwing. The nozzle body 132, 332, 432 is attached to the movable member 656. By actuating drive motors 657 and 658 coupled to the ball screw shafts 651 and 655, respectively, the nozzle body 132, 332, 432 can be moved along the ceiling 121, i.e. , the horizontal positions of the nozzle body 132, 332, 432 can be moved.

The foregoing third embodiment is described as a case using the cutting liquid jetting device 330 including the nozzle body 332 which jets the cutting liquid 10 in the form of droplets in such a way that the cutting liquid 10 forms a liquid curtain surrounding the work 1 in a conical shape, and which also jets the cutting liquid 10 inside the entire liquid curtain in the form of droplets so that the work 1 can be showered with the cutting liquid 10 in a conical shape. Instead, as another embodiment, it is possible to use cutting liquid jetting means which, for example, jets the cutting liquid 10 in the form of a membrane in such a way that the cutting liquid 10 forms a liquid curtain surrounding the work 1 in the conical shape, and which also jets the cutting liquid 10 inside the entire liquid curtain in the form of droplets so that the work 1 can be showered with the cutting liquid 10 in the conical shape.

The foregoing fourth embodiment is described as a case using the cutting liquid jetting device 430 which jets the cutting liquid 10 in the form of a membrane in such a way that the cutting liquid 10 forms a liquid curtain surrounding the work 1 in a pyramid shape. Instead, as another embodiment, it is possible to use, for example, cutting liquid jetting means for jetting the cutting liquid 10 in the form of droplets in such a way that the cutting liquid 10 forms a liquid curtain surrounding the work 1 in the pyramid shape. It is also possible to use cutting liquid jetting means for jetting the cutting liquid 10 in the form of a membrane or droplets in such a way that the cutting liquid 10 forms a liquid curtain surrounding the work 1 in the pyramid shape, and which also jets the cutting liquid 10 inside the entire liquid curtain in the form of droplets so that the work 1 can be showered with the cutting liquid 10 in a pyramid shape.

The foregoing fourth embodiment is also described as a case using the cutting liquid jetting device 430 including the four nozzle bodies 432 each of which jets the cutting liquid 10 in such a fan shape that the cutting liquid 10 forms liquid curtains together surrounding the work 1 in a pyramid shape. However, the present invention is not to be limited to this embodiment. As another embodiment, it is possible to use, for example, cutting liquid jetting means including three nozzle bodies 432 each of which jets the cutting liquid 10 in such a fan shape that the cutting liquid 10 forms liquid curtains together surrounding the work 1 in a three-sided pyramid shape. It is also possible to use cutting liquid jetting means including five or more nozzle bodies 432 each of which jets the cutting liquid 10 in such a fan shape that the cutting liquid 10 forms liquid curtains together surrounding the work 1 in a pyramid shape with five or more sides.

### INDUSTRIAL APPLICABILITY

The machine tool according to the present invention can suppress the scattering of cut dust to its surrounding areas without causing a large restraint in the replacement, displacement and the like of a tool and a work material, and therefore can be used very beneficially in a metal processing industry and the like.

### REFERENCE SIGNS LIST

- 1: work
- 10: cutting liquid
- 100: machine tool
- 110: machine body
- 111: base
- 112: bed
- 113: table
- 114: main spindle
- 120: cover
- 121: ceiling
- 122: door
- 123: cutting liquid receiver
- 130: cutting liquid jetting device
- 131: spherical bearing
- 131a: seat
- 131b: spherical member
- 132: nozzle body
- 132a: receiving hole
- 132b: jetting hole
- 132c: communication hole
- 132d: block
- 132e: bracket
- 132f: jetting slit
- 141: cutting liquid supply tube
- 200: machine tool
- 230: cutting liquid jetting device
- 232d: block
- 232e: notch
- 300: machine tool
- 330: cutting liquid jetting device
- 332: nozzle body
- 332a: receiving hole
- 332b: jetting hole
- 332c: communication hole
- 332d, 332e: partition plate
- 332f, 332g: flow path
- 400: machine tool
- 430: cutting liquid jetting device
- 432: nozzle body
- 432a: receiving hole
- 432b: jetting slit
- 432c: communication hole
- 433: support tube
- 433a: flow path
- 434: distribution plate
- 434a: distribution path
- 435: attachment pedestal
- 435a: flow path
- 435b: attachment surface
- 530: cutting liquid jetting device
- 536: inner retaining ring
- 536a: support shaft
- 537: outer retaining ring
- 537a: support shaft
- 651, 655: ball screw shaft
- 652, 654, 656: movable member
- 653: guide rail
- 657, 658: drive motor

## Claims

1. A machine tool in which cut dust is produced and scattered due to cutting of a work material with a tool, **characterized by** comprising cutting liquid jetting means for surrounding the work material with a cutting liquid by jetting the cutting liquid in such a shape that the cutting liquid spreads wider on a lower side than on an upper side.

2. The machine tool according to claim 1, **characterized in that** the cutting liquid jetting means jets the cutting liquid in the form of a membrane or droplets in such a way that the cutting liquid forms a liquid curtain surrounding the work material in a conical or pyramid shape.

3. The machine tool according to claim 2, **characterized in that** the cutting liquid jetting means jets the cutting liquid also inside the liquid curtain in the form of droplets.

4. The machine tool according to any one of claims 1 to 3, **characterized in that** the cutting liquid jetting means includes jetting direction changing means capable of changing a direction of jetting the cutting liquid in such a way that the direction follows a cutting point.

5. The machine tool according to any one of claims 1 to 3, **characterized by** further comprising position moving means for moving a horizontal position of the cutting liquid jetting means.
